# EUROPEAN PATENT SPECIFICATION

(11) **EP 3 290 238 B1**
(45) Date of publication and mention of the grant of the patent: **13.04.2022**
(21) Application number: 17188402.6
(22) Date of filing: 29.08.2017
(51) Int. Cl.: B60C 15/04

(54) **HEAVY DUTY TIRE**
SCHWERLASTREIFEN
PNEU POUR FONCTIONNEMENT INTENSIF

(30) Priority: 30.08.2016 US 201662381149 P
(43) Date of publication of application: 07.03.2018
(73) Proprietor: The Goodyear Tire & Rubber Company, Akron, OH 44316 (US)
(72) Inventor: BISHOP, Daniel Austin, Barberton, Ohio 44203 (US)
(74) Representative: Kutsch, Bernd

(56) References cited:
- EP-A1- 1 023 191
- JP-A- 2005 178 668
- US-A- 4 216 814
- US-A- 4 227 563
- US-A1- 2002 079 038

## Description

### Technical Field

This invention pertains to pneumatic tires and preferably to heavy duty pneumatic tires such as they are commonly used on earthmoving and mining equipment or other heavy vehicles.

### Background

The present invention preferably relates to tires intended to be fitted to a heavy vehicle, typically in the size ranges of 57 inch radial through 63 inch radial (144.78 cm to 160.02 cm). Although not restricted to this type of application, the tire of the present invention may be used on off highway trucks including dump trucks, rigid frame trucks, large haulage trucks, equipment used for mining, and earthmoving equipment. These off-highway trucks travel across extremely challenging surfaces while typically carrying enormous loads. As a result, the tires on these vehicles are exposed to tremendous forces.

The tires of this sort are typically designed with a bead core in the lower sidewall of the tire that has a round, cross-sectional shape. These tires are usually mounted on wheels that have flat seated rims, so that the surfaces of the rim against which the base of the beads are mounted have a rim taper on the order of 5 degrees with respect to the axial direction. Because the tires are subjected to very high loads, it has become apparent that these tires are subject to wear in the bead region. This type of bead wear may be caused by uneven compression under the bead, resulting in uneven wear due to non-uniform shear stress. It is desired to have an improved tire design to reduce the wear in the bead region of the tire, and to reduce the shear stresses in the bead region of the tire.

US-A-4,216,814 describes a pneumatic tire in accordance with the preamble of claim 1. Such tires are also known from US-A-4,227,563, US-A-2002/0079038 and WO-A-98/54010.

### Definitions

"Axial" and "axially" mean lines or directions that are parallel to the axis of rotation of the tire;

"Bead" means that part of the tire comprising an annular tensile member wrapped by ply cords and shaped, with or without other reinforcement elements such as flippers, chippers, apexes, toe guards and chafers, to fit the design rim;

"Carcass" means the tire structure apart from the belt structure, tread, under tread, and sidewall rubber over the plies, but including the beads;

"Circumferential" means lines or directions extending along the perimeter of the surface of the annular tread perpendicular to the axial direction;

"Chafer" refers to a narrow strip of material placed around the outside of the bead to protect cord plies from the rim, distribute flexing above the rim, and to seal the tire;

"Chipper" means a reinforcement structure located in the bead portion of the tire;

"Cord" means one of the reinforcement strands which the plies in the tire comprise;

"Equatorial plane (EP)" means the plane perpendicular to the tire's axis of rotation and passing through the center of its tread;

"Ply" means a continuous layer of rubber-coated parallel cords;

"Radial" means a direction that intersects the axis of rotation and is perpendicular thereto;

### Summary of the Invention

The invention relates to a tire mounted on a rim in accordance with claim 1.

Dependent claims refer to preferred embodiments of the invention.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead core is not symmetrical about a radial plane that extends through the centerpoint of the bead core.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead core is not symmetrical about any plane that extends through the centerpoint of the bead core.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead core is not symmetrical about an XX plane that extends through the centerpoint of the bead core and is perpendicular to a radial plane.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead core has a bead face oriented at an angle α that is greater than the taper angle β of the rim flange.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead core has a bead face oriented at an angle α in the range of 6 to 8 degrees.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead core has a maximum bead width W in the range of from 88.9 to 114.3 mm.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead core has a maximum bead width W in the range of from 95.25 mm to 3.75 to 109.22 mm.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead face has angled shoulders disposed on each side of the bead face, wherein each of the shoulders are rounded.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead face has angled shoulders disposed on each side of the bead face, wherein each of the shoulders are rounded, and wherein the radius of curvature of the angled shoulders is in the range of from 12.7 mm to 22.86 mm.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead core has a ratio of the bead height h to the bead width W is in the range of from 0.4 to 0.8.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead core has a ratio of the bead height h to the bead width W is in the range of from 0.4 to 0.7.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead core has a ratio of the bead height h to the bead width W is in the range of from 0.5 to 0.6.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead core has an axially inward extended toe.

One or more embodiments of the present invention provide a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead core has a bead face formed of a dual taper surface.

One or more embodiments of the present invention provides a pneumatic tire comprising a carcass, the carcass having one or more cord reinforced plies and a pair of bead portions, each bead portion having at least one annular inextensible bead core about which the cord reinforced plies are wrapped, a tread and a belt reinforcing structure disposed radially outward of the carcass, the bead portion further comprising an apex which extends radially outward of the bead core, and a chafer, the tire further comprising a bead core having a substantially flat bead face joined together with rounded ends on each side of the bead face, wherein the bead core has a concave bead face.

### Brief Description of the Drawings

The invention may take physical form and certain parts and arrangements of parts, several preferred embodiments of which will be described in detail in this specification and illustrated in the accompanying drawings which form a part whereof and wherein:
Figure 1 is a cross-sectional view of one half of the tire shown mounted on a rim;
Figure 2 is a cross-sectional view illustrating a lower sidewall of a heavy-duty tire according to a first embodiment of the invention;
Figure 3 is an enlarged cross-sectional view of the bead core of the present invention;
Figure 4 is a cross-sectional view illustrating a lower sidewall of a heavy-duty tire according to a second embodiment of the invention;
Figure 5 is a cross-sectional view illustrating a lower sidewall of a heavy-duty tire according to a third embodiment of the invention;

### Detailed Description of Example Embodiments of the Invention

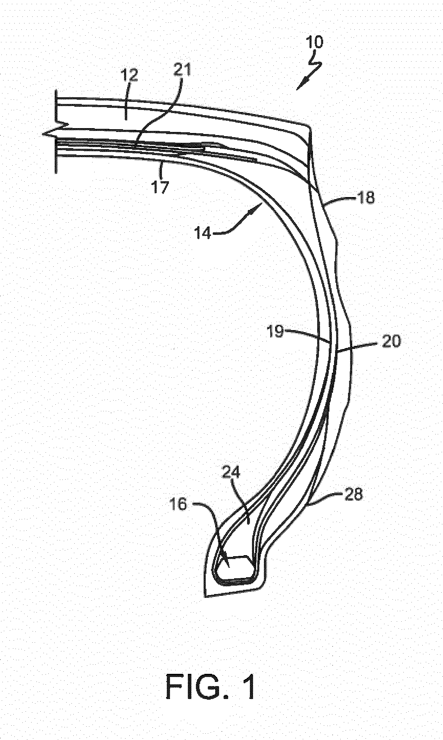

With reference to Fig. 1, a cross-sectional view of one half of a lower sidewall region of a tire 10 of the present invention is illustrated. The tire 10 has a carcass 14 which includes a crown region having a radially outer tread 12 disposed over the crown region of the carcass 14. The outer surface of the tread may further include a plurality of lands and grooves or a plurality of tread blocks and grooves, as commonly known to those skilled in the art. The carcass further includes an optional inner liner 17 that covers the entire interior facing surface of the tire carcass and serves to hold the air or gas mixture that is used to inflate the tire. The inner liner of the tire is typically made of butyl rubber. The carcass 14 further includes a pair of tire sidewalls 18 which extend radially inward from the outer radial surface of the of the tire carcass, terminating in the vicinity of a pair of inextensible annular tensile members or bead cores 16.

The carcass further includes one or more preferably steel cord reinforced plies 19 preferably wrapped about each bead core 16 forming a turnup portion 20, more preferably an envelope turnup. The portion of the ply which extends from the crown towards the bead and is axially inwards of the bead is referred to as the down portion of the ply or down ply, while the portion of the ply which extends radially and axially outwards from the bead is referred to as the up ply or turnup portion. The one or more plies 19 are preferably oriented in the radial direction. Disposed radially outwardly of the ply 19 in the crown area of the tire is a preferably steel reinforced belt package 21 formed of one, two or more belts. A pair of sidewalls 18 extend radially inward from the radially outer tread 12 to the bead area. Preferably, there is an elastomeric apex 24 located radially outward of the bead core 16. The apex 24 preferably has a triangular cross-sectional shape. Wrapped around the bead core 16 is an optional flipper (not shown). The flipper is preferably located between the bead core 16 and the carcass ply 19. Located on the axially inner edge of the bead area is an optional chafer 28.

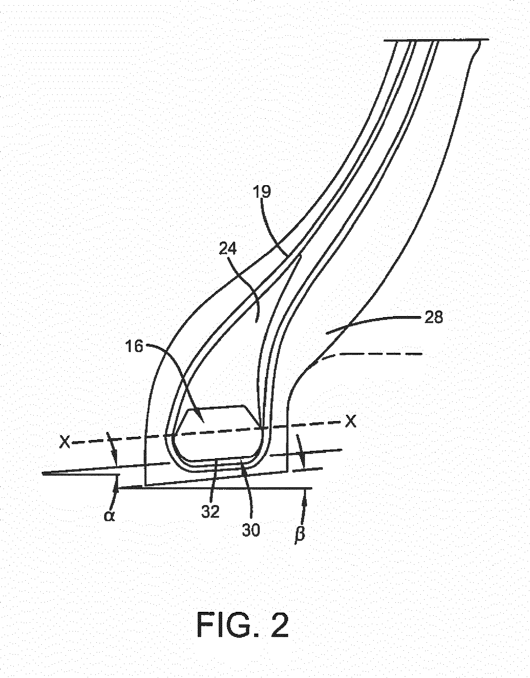

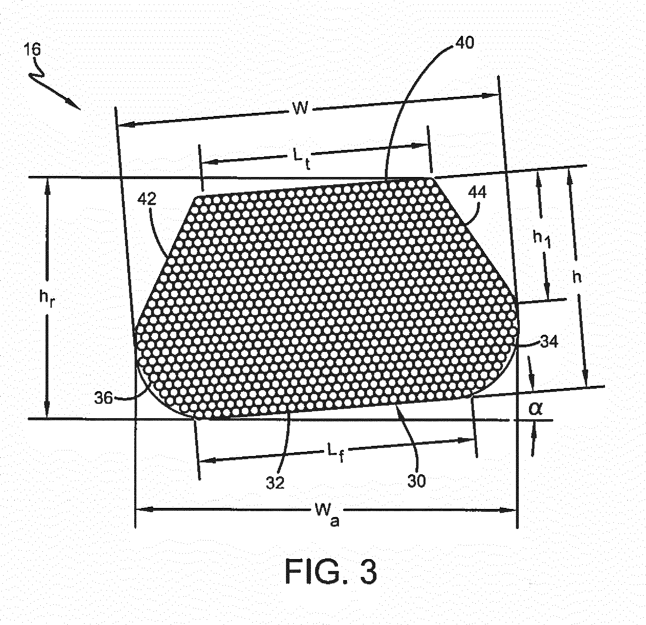

As shown in Figure 2, each annular bead core 16 has an asymmetrical cross sectional shape, as the bead core 16 is not symmetrical about an axis X-X. The annular bead core as shown in Figure 3 has a lower radially inner surface or bead face 30 that has a substantially flat portion 32. The bead face 30 is oriented at an angle α that is greater than the taper angle β of the rim flange, which is typically 5 degrees. The angle α is in the range of 6 to 8 degrees. The bead face 30 preferably has a flat surface Lf having a length in the range of from 63.5 mm to 82.55 mm, and more preferably in the range of 69.85 mm to 76.2 mm. The bead face 30 has angled shoulders 34, 36 on each side of the bead face that are rounded. The radius of curvature of the angled shoulders is in the range of from 12.7 mm to 22.86 mm, and more preferably in the range of from 15.24 mm to 20.32 mm. The bead core 16 preferably has a maximum bead width W in the range of from 88.9 mm to 114.3 mm, and more preferably of from 95.25 mm to 109.22 mm. The bead core 16 has an upper surface 40 that is preferably parallel to the bead face 30. The upper surface 40 is preferably flat. The upper surface is joined by an axially-inward and axially-outward angled surfaces 42, 44. The upper surface 40 together with the angled surfaces 42, 44 are arranged to resemble the upper half of a hexagonal bead core. In other words, the angled surfaces 42, 44 preferably make a γ angle of 120 degrees or of 120 degrees +/- 5 degrees with the upper surface.

Because the bead core 16 is rotated an angle α, the radial height hr of the bead core as measured from the radially outermost point to the radially innermost point of the bead core cross-section, is in the range of from 50.8 mm to 76.2 mm, and more preferably in the range of from 58.42 mm to 68.58 mm. The axial width Wa is preferably in the range of from 88.9 to 100.8 mm, and more preferably in the range of from 96.52 mm to 109.22 mm. The ratio of the bead height h to the width W is preferably in the range of from 0.4 to 0.8, more preferably in the range of from 0.4 to 0.7, and even more preferably in the range of from 0.5 to 0.6.

The bead core 16 is preferably formed from a plurality of wound bead wires, each wire having a diameter in the range of 2-4 mm.

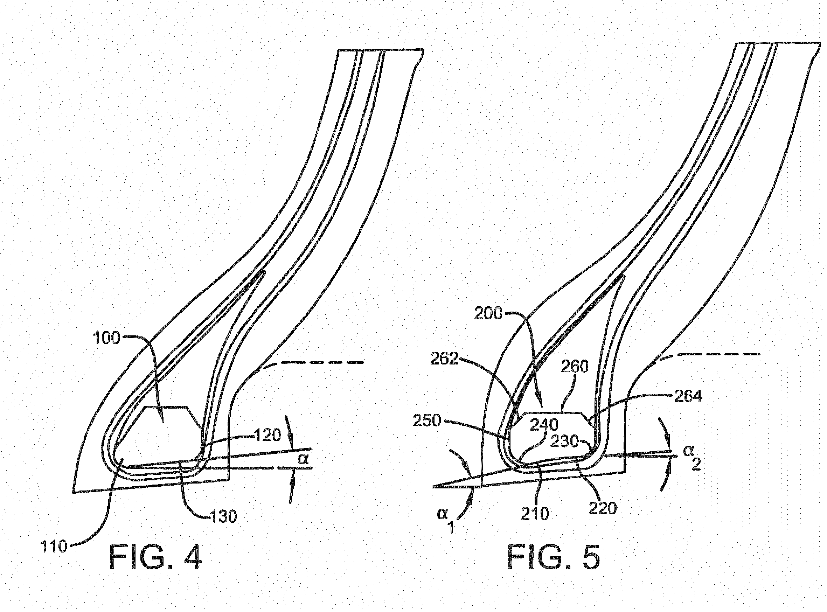

Figure 4 illustrates an alternate embodiment of the bead core 100 of the present invention. The bead core 100 has an enlarged toe 110 and a rounded heel 120. The bead core 100 has a flat lower bead face 130. The extended enlarged toe 110 allows the ply turndown angle to be increased so that it is closer to its deflected shape. The flat lower bead face 130 has a length of 63.5 mm for instance or a length in a range of from 56 to 70 mm for instance. The flat lower bead face 130 is angled at an angle of 6 degrees. The width of the bead core is in the range of 1.5*h to 2*h with h being the bead height.

Figure 5 illustrates a third embodiment of the bead core 200 of the present invention. The bead core 200 has a first flat bead face 210 joined with a second flat bead face 220. The first flat bead face 210 is angled at an angle α1 in the range of from 10 to 14 degrees, while the second flat bead face 220 is angled at an angle α2 in the range of from 4 to 6 degrees. Thus, the bead face 210, 220 has a dual taper not equal to the rim taper. The bead core 200 has rounded edges 230, 240. The axially inner rounded edge 240 transitions to a radial edge 250. The bead core width W is in the range of 1.5 to 2 times the bead height h. The bead core 200 has an upper surface 260 that may be parallel to one of the bead faces 210, 220. The upper surface 260 is preferably flat. The upper surface is joined by an axially-inward and axially-outward angled surfaces 262, 264. The upper surface 260 together with the angled surfaces 262, 264 are preferably arranged to resemble the upper half of a hexagonal bead core. In other words, the angled surfaces 262, 264 make a γ angle 120 degrees with the upper surface 260 or of 120 degrees +/- 5 degrees with the upper surface 260.

## Claims

1. A pneumatic tire mounted on a rim, the pneumatic tire (10) comprising a carcass (14), the carcass (14) having one or more cord reinforced plies (19) and a pair of bead portions, each bead portion having at least one annular bead core (16), a tread (12) and a belt reinforcing structure (21) disposed radially outward of the carcass (14), the bead core (16) having a flat or substantially flat bead face (30) or at least a flat or substantially flat portion (32) of the bead face (30), the bead face (30) being the radially innermost face of the bead core (16), wherein the bead face (30) is joined together with rounded ends (34, 36) on each side of the bead face (30), **characterized in that** (i) the bead core (16) has a bead face (30) oriented at an angle (α) with respect to the axial direction of the tire (10) in a range of from 6 to 8 degrees, and **in that** the angle (α) is greater than the taper angle (β) of a rim flange of a rim on which the tire (10) is designed to be mounted; or **in that** (ii) the bead core (16) has a bead face (30) formed of a dual taper surface comprising a first flat surface (210) and a second flat surface (220), the first flat surface (210) being angled at an angle (α₁) in the range of from 10 to 14 degrees and the second flat surface (220) being angled at an angle (α₂) in the range of from 4 to 6 degrees.

2. The pneumatic tire of claim 1 wherein the rounded ends (34, 36) are the axially inner and axially outer radially inner shoulders of the bead core (16).

3. The pneumatic tire of claim 1 or 2 wherein the bead portion further comprising an apex (24) which extends radially outward of the bead core (16), and preferably also a chafer (28).

4. The pneumatic tire of at least one of the previous claims wherein the bead core (16) is not symmetrical about a plane that is parallel to the radial direction of the tire and extends through the center point or center of gravity of the bead core (16) and that is perpendicular to the cross section of the tire.

5. The pneumatic tire of at least one of the previous claims wherein the bead core (16) is not symmetrical about any plane that extends through the center point or center of gravity of the bead core (16) and that is perpendicular to the cross section of the tire.

6. The pneumatic tire of at least one of the claims wherein the bead core (16) has a maximum bead width (W) in the range of from 88.9 to 114.3 mm, preferably in a range of from 95.25 to 109.22 mm.

7. The pneumatic tire of at least one of the claims wherein the bead face (30) has angled shoulders (34, 36) disposed on each side of the bead face (30), wherein each of the shoulders are rounded.

8. The pneumatic tire of at least one of the claims wherein the radius of curvature of the angled shoulders (34, 36) and/or the radius of curvature of the rounded ends on each side of the bead face (30) is in the range of from 12.7 mm to 22.86 mm.

9. The pneumatic tire of at least one of the claims wherein the bead core (16) has a ratio of the bead height (H) to the bead width (W) is in the range of from 0.4 to 0.8, preferably 0.4 to 0.7 or 0.5 to 0.6

10. The pneumatic tire of at least one of the claims wherein the bead core (16) has a toe (110) that is axially extended towards the axially inner side of the tire (10).

11. The pneumatic tire of claim 1 wherein the annular bead core (16) is an annular inextensible bead core (16).

12. The pneumatic tire of claim 1 or 11 wherein the one or more cord reinforced plies (19) are wrapped about the annular bead core (16).

## Patentansprüche

1. Luftreifen, der auf einer Felge montiert ist, wobei der Luftreifen (10) eine Karkasse (14) umfasst, wobei die Karkasse (14) eine oder mehrere kordverstärkte Lagen (19) und ein Paar Wulstabschnitte aufweist, wobei jeder Wulstabschnitt wenigstens einen ringförmigen Wulstkern (16), eine Lauffläche (12) und eine Gürtelverstärkungsstruktur (21) aufweist, die radial außerhalb der Karkasse (14) angeordnet ist, wobei der Wulstkern (16) eine flache oder eine im Wesentlichen flache Wulstfläche (30) oder wenigstens einen flachen oder im Wesentlichen flachen Abschnitt (32) der Wulstfläche (30) aufweist, wobei die Wulstfläche (30) die radial innerste Fläche des Wulstkerns (16) ist, wobei die Wulstfläche (30) auf jeder Seite der Wulstfläche (30) mit abgerundeten Enden (34, 36) zusammengefügt ist, **dadurch gekennzeichnet, dass** (i) der Wulstkern (16) eine Wulstfläche (30) aufweist, die in einem Winkel (α) hinsichtlich der axialen Richtung des Reifens (10) in einem Bereich von 6 bis 8 Grad ausgerichtet ist, und dadurch, dass der Winkel (α) größer als der Kegelwinkel (β) eines Felgenhorns einer Felge ist, wobei der Reifen (10) konstruiert ist, um auf dieser montiert zu werden; oder dadurch, dass (ii) der Wulstkern (16) eine Wulstfläche (30) aufweist, die aus einer doppelt kegeligen Oberfläche ausgebildet ist, die eine erste ebene Oberfläche (210) und eine zweite ebene Oberfläche (220) umfasst, wobei die erste ebene Oberfläche (210) in einem Winkel (α₁) in dem Bereich von 10 bis 14 Grad abgewinkelt ist und die zweite ebene Oberfläche (220) in einem Winkel (α₂) in dem Bereich von 4 bis 6 Grad abgewinkelt ist.

2. Luftreifen nach Anspruch 1, wobei die abgerundeten Enden (34, 36) die axial innere und die axial äußere radial innere Schulter des Wulstkerns (16) sind.

3. Luftreifen nach Anspruch 1 oder 2, wobei der Wulstabschnitt ferner einen Kernreiter (24), der sich von dem Wulstkern (16) radial nach außen erstreckt, und vorzugsweise ebenso ein Wulstband (28) umfasst.

4. Luftreifen nach wenigstens einem der vorhergehenden Ansprüche, wobei der Wulstkern (16) nicht symmetrisch um eine Ebene ist, die parallel zu der radialen Richtung des Reifens ist und sich durch den Mittelpunkt oder den Schwerpunkt des Wulstkerns (16) erstreckt und die senkrecht zu dem Querschnitt des Reifens ist.

5. Luftreifen nach wenigstens einem der vorhergehenden Ansprüche, wobei der Wulstkern (16) nicht symmetrisch um eine beliebige Ebene ist, die sich durch den Mittelpunkt oder den Schwerpunkt des Wulstkerns (16) erstreckt und die senkrecht zu dem Querschnitt des Reifens ist.

6. Luftreifen nach wenigstens einem der Ansprüche, wobei der Wulstkern (16) eine maximale Wulstbreite (W) in dem Bereich von 88,9 bis 114,3 mm, vorzugsweise in dem Bereich von 95,25 bis 109,22 mm aufweist.

7. Luftreifen nach wenigstens einem der Ansprüche, wobei die Wulstfläche (30) abgewinkelte Schultern (34, 36) aufweist, die auf jeder Seite der Wulstfläche (30) angeordnet sind, wobei jede der Schultern abgerundet ist.

8. Luftreifen nach wenigstens einem der Ansprüche, wobei der Krümmungsradius der abgewinkelten Schultern (34, 36) und/oder der Krümmungsradius der abgerundeten Enden auf jeder Seite der Wulstfläche (30) in dem Bereich von 12,7 mm bis 22,86 mm liegt.

9. Luftreifen nach wenigstens einem der Ansprüche, wobei der Wulstkern (16) ein Verhältnis der Wulsthöhe (H) zu der Wulstbreite (W) aufweist, das in dem Bereich von 0,4 bis 0,8, vorzugsweise 0,4 bis 0,7 oder 0,5 bis 0,6 liegt.

10. Luftreifen nach wenigstens einem der Ansprüche, wobei der Wulstkern (16) eine Spitze (110) aufweist, die sich zu der axial inneren Seite des Reifens (10) axial erstreckt.

11. Luftreifen nach Anspruch 1, wobei der ringförmige Wulstkern (16) ein ringförmiger undehnbarer Wulstkern (16) ist.

12. Luftreifen nach Anspruch 1 oder 11, wobei die eine oder die mehreren kordverstärkten Lagen (19) um den ringförmigen Wulstkern (16) gewickelt sind.

## Revendications

1. Bandage pneumatique monté sur une jante, le bandage pneumatique (10) comprenant une carcasse (14), la carcasse (14) possédant une ou plusieurs nappes (19) qui sont renforcées avec des câblés et une paire de portions faisant office de talons, chaque portion faisant office de talon possédant au moins une tringle de talon de forme annulaire (16), une bande de roulement (12) et une structure de renforcement de ceinture (21) qui est disposée dans la direction radiale à l'extérieur de la carcasse (14), la tringle de talon (16) possédant une face de talon plate ou essentiellement plate (30) ou au moins une portion plate ou essentiellement plate (32) de la face de talon (30), la face de talon (30) représentant la face de la tringle de talon (16) la plus interne dans direction radiale ; dans lequel la face de talon (30) est jointe de manière conjointe à des extrémités de forme arrondie (34, 36) sur chaque côté de la face de talon (30) ; **caractérisé en ce que** (i) la tringle de talon (16) possède une face de talon (30) qui est orientée en formant un angle (a) par rapport à la direction axiale du bandage pneumatique (10) qui se situe dans une plage allant de 6 à 8 degrés ; et **en ce que** l'angle (a) est supérieur à l'angle de conicité (β) d'un rebord de jante d'une jante sur laquelle le bandage pneumatique (10) est destiné à être monté ; ou **en ce que** (ii) la tringle de talon (16) possède une face de talon (30) réalisée à partir d'une double surface conique qui comprend une première surface plate (210) et une deuxième surface plate (220), la première surface plate (210) formant un angle (a₁) qui se situe dans une plage allant de 10 à 14 degrés et la deuxième surface plate (220) formant un angle (a₂) qui se situe dans une plage allant de 4 à 6 degrés.

2. Bandage pneumatique selon la revendication 1, dans lequel les extrémités de forme arrondie (34, 36) représentent les épaulements de la tringle de talon (16), internes dans la direction axiale et externes dans la direction axiale.

3. Bandage pneumatique selon la revendication 1 ou 2, dans lequel la portion faisant office de talon comprend en outre un bourrage sur tringle (24) qui s'étend dans la direction radiale à l'extérieur de la tringle de talon (16), et de préférence également une bandelette talon (28).

4. Bandage pneumatique selon au moins une des revendications précédentes, dans lequel la tringle de talon (16) n'est pas symétrique par rapport à un plan qui est parallèle à la direction radiale du bandage pneumatique et s'étend en passant par le point central ou par le centre de gravité de la tringle de talon (16) et qui est perpendiculaire à la section transversale du bandage pneumatique.

5. Bandage pneumatique selon au moins une des revendications précédentes, dans lequel la tringle de talon (16) n'est pas symétrique par rapport à n'importe quel plan qui s'étend en passant par le point central ou par le centre de gravité de la tringle de talon (16) et qui est perpendiculaire à la section transversale du bandage pneumatique.

6. Bandage pneumatique selon au moins une des revendications précédentes, dans lequel la tringle de talon (16) possède une largeur de talon maximale (W) qui se situe dans la plage allant de 88,9 à 114,3 mm, de préférence dans une plage qui s'étend de 95,25 à 109,22 mm.

7. Bandage pneumatique selon au moins une des revendications précédentes, dans lequel la face de talon (30) possède des épaulements angulaires (34, 36) qui sont disposés sur chaque côté de la face de talon (30) ; dans lequel chacun des épaulements possède une forme arrondie.

8. Bandage pneumatique selon au moins une des revendications précédentes, dans lequel le rayon de courbure des épaulements angulaires (34, 36) et/ou le rayon de courbure des extrémités de forme arrondie sur chaque côté de la face de talon (30) se situe(nt) dans la plage allant de 12,7 mm à 22,86 mm.

9. Bandage pneumatique selon au moins une des revendications précédentes, dans lequel la tringle de talon (16) possède un rapport de la hauteur de talon (H) à la largeur de talon (W) qui se situe dans la plage allant de 0,4 à 0,8, de préférence de 0,4 à 0,7 ou de 0,5 à 0,6.

10. Bandage pneumatique selon au moins une des revendications précédentes, dans lequel la tringle de talon (16) possède un bout de talon (110) qui s'étend dans la direction axiale en direction du côté du bandage pneumatique (10), interne dans la direction axiale.

11. Bandage pneumatique selon la revendication 1, dans lequel la tringle de talon de forme annulaire (16) représente une tringle de talon inextensible de forme annulaire (16).

12. Bandage pneumatique selon la revendication 1 ou 11, dans lequel lesdites une ou plusieurs nappes renforcées par des câblés (19) viennent s'enrouler autour de la tringle de talon de forme annulaire (16).
